Europäisches Patentamt

European Patent Office

Office européen des brevets

(11) Publication number: **0 030 159**
**B1**

## EUROPEAN PATENT SPECIFICATION

(45) Date of publication of patent specification: **12.12.84**

(21) Application number: **80304346.2**

(22) Date of filing: **03.12.80**

(51) Int. Cl.³: **H 04 N 9/30**, H 04 N 9/16,
G 09 F 13/26

(54) Colour display apparatus.

(30) Priority: **04.12.79 JP 158814/79**
**04.12.79 JP 158815/79**

(43) Date of publication of application:
**10.06.81 Bulletin 81/23**

(45) Publication of the grant of the patent:
**12.12.84 Bulletin 84/50**

(84) Designated Contracting States:
**DE FR GB**

(56) References cited:
**US-A-3 935 590**

**PROCEEDINGS OF THE SOCIETY FOR
INFORMATION DISPLAY, vol. 20, no. 3, third
quarter 1979, LOS ANGELES , Cal. (US),
TAKEHIRO KOJIMA et al.: "Sixteen-inch gas-
discharge display panel with 2-lines-at-a-time
driving", pages 153-158**

(73) Proprietor: **MITSUBISHI DENKI KABUSHIKI
KAISHA
2-3, Marunouchi 2-chome Chiyoda-ku
Tokyo 100 (JP)**

(72) Inventor: **Kurahashi, Koichiro c/o Mitsubishi
Denki
Kabushiki Kaisha Chuo Laboratory, No.80 Aza-
Nakano
Minami-shimizu Amagasaki-shi Hyogo (JP)**

(74) Representative: **Cooper, Derek Robert et al
Marks & Clerk Alpha Tower Suffolk Street
Queensway
Birmingham B1 1TT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The present invention relates to apparatus for displaying coloured images, having a display surface composed of a plurality of light-emission elements each of which emits light in one of three primary colours of red, green and blue (hereinafter denoted as "R", "G" and "B", respectively where appropriate). More particularly, the invention relates to such apparatus having an arrangement of light-emission elements in which the resolution, colour mixing, and brightness of the display area are significantly improved. The invention is particularly applicable to such apparatus in which the display surface is large, for example more than 30 m² in area.

Conventional colour image display apparatuses include a large number of picture elements, each picture element being made up of individual light-emission elements which emit light in the three primary colours. Usually each picture element is constituted by arranging in combination three light-emission elements, namely a red light-emission element, a green light-emission element and a blue light-emission element. However, in constructing colour display apparatus having a large display area using such light-emission elements, the spacing or pitch between the light-emission elements has a lower limit due to inherent structural requirements of the display surface and the light-emission elements themselves. Also, the total number of elements has an upper limit due to economic reasons. Accordingly, the conventional apparatuses are not always satisfactory as to the quality of the displayed image. For instance, the primary colours provided by the individual light-emission elements are often observable separately from one another and the brightness of the displayed image is often insufficient.

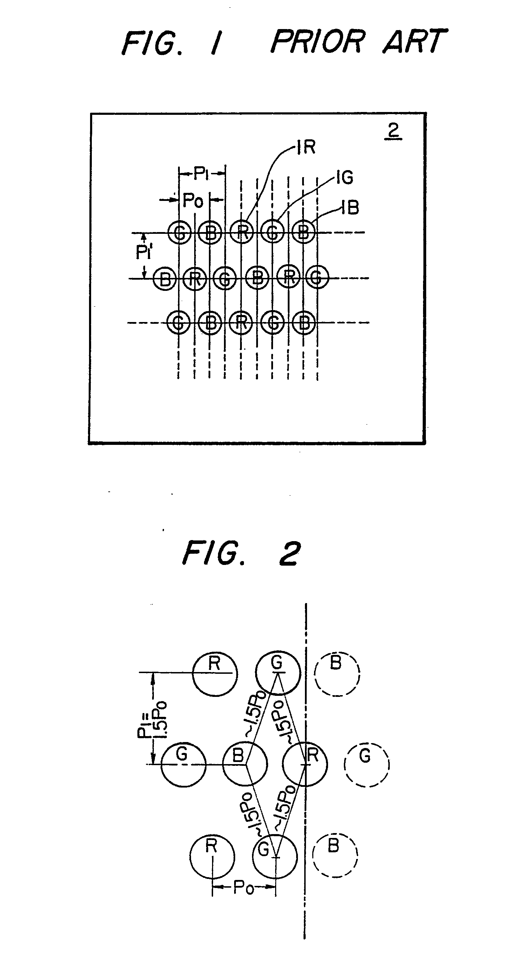

Figure 1 shows conventional arrangement of light-emission elements for a display apparatus, wherein reference characters 1R, 1G and 1B designate light-emission elements of the three primary colours respectively, and reference numeral 2 denotes a display surface of the apparatus. The light-emission elements are selected for energisation by means of column and row selecting lines (not shown) and are driven by corresponding video signals. More particularly, the colour video signals are sampled and applied to the light-emission elements corresponding to their positions so that they emit light at a brightness corresponding to the signal amplitude.

In Figure 1, the light-emission elements in each row are arranged at a pitch of $P_0$ in the order R, G, B, R, G, B..., so that the horizontal pitch of light-emission elements of the same colour is $3P_0$. The same colour light-emission element in odd numbered rows and in even numbered rows as viewed vertically are shifted by $P_1 = 1.5P_0$ from one another. The pitch $P'_1$ of the rows is usually set to a value which is close to the value $P_1$. The following description assumes $P'_1 = P_1$.

It is well known that, in the case where the same colour elements in adjacent rows are shifted as shown in Figure 1, the equivalent sampling pitch of the displayed image in the horizontal direction can be regarded as the shortest distance in the horizontal direction between light-emission elements of the same colour. In Figure 1, the equivalent sampling pitch in the horizontal direction is $P_1 = 1.5P_0$.

The above-described arrangement of the light-emission elements provides the following results.

(I) Resolution
The resolution of the displayed image is mainly governed by the equivalent sampling pitch of the green light-emission elements because the human eye is most sensitive to and has its highest resolution for wavelengths around that of green light and is less sensitive to red and blue light. The red and blue light-emission elements, however, are necessary for colour reproduction. Because of the structural requirements of the display surface and the light-emission elements, the pitch of the light-emission elements has a lower limit. In the case where the display surface is constituted by light-emission elements arranged at said lower limit with a pitch of $P_0$, with respect to the equivalent sampling pitch for determining the resolution of a displayed image, the horizontal or vertical pitch is $P_1 = 1.5P_0$.

(II) Colour mixing
For a display apparatus constructed with three primary colour elements, if the density of the light-emission elements is not sufficiently high, the three primary colours are not sufficiently mixed, that is the lights from the different light-emission elements are separately or individually observable, and the quality of the displayed colour image is degraded. The lower quality of the displayed image due to colour separation appears most significant in the edge portions of the image beacuse of physiological properties of the human eye. Figure 2 illustrates the observed image at one such edge portion. By way of example, consider the case where the edge of a white figure (such as a character) is positioned as shown in Figure 2, such that the area to the left-hand side of the double chain-dotted line is white and the area to the righthand side of the line is black. As is clear from Figure 2, the red (R) element on the edge of the Figure is spaced by about $1.5P_0$ from the green (G) element with which the light from the red (R) element should be mixed. For improving the quality of the displayed image, it is desired to provide an arrangement having a shorter spacing between red (R) and green (G) light-emission elements at the edge portions of the image. The same applies for the blue (B) and green (G) light-emission elements.

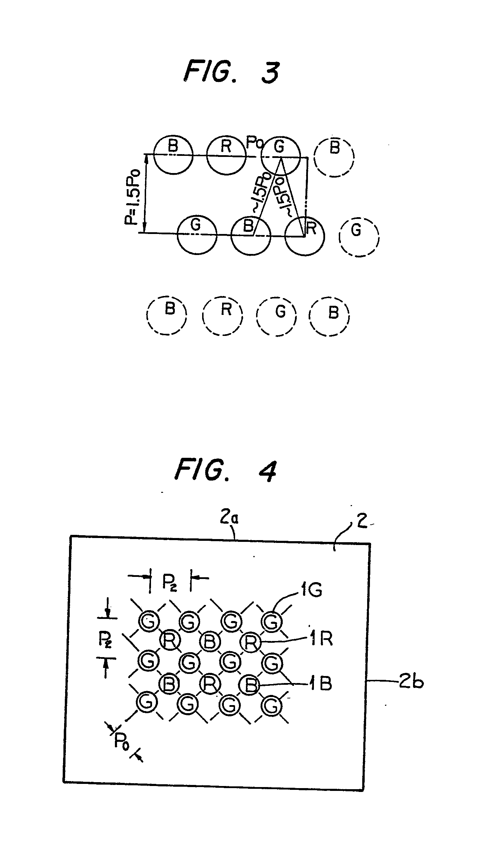

In the case where a thin white line is displayed horizontally as depicted in Figure 3, it is necessary to eliminate the chance that only blue or red light-emission elements at the end of the white line emit light. In order to meet this requirement with the arrangement of Figure 1, it is necessary for the width of the line at least to equal the width of two rows of light-emission elements, i.e. $1.5P_0$. This concept is applicable also to a line extending vertically, and in the arrangement of Figure 1 such a line should have a width of at least $P_0$.

In general, most characters to be displayed are constituted by vertical and horizontal strokes. Therefore, in the case where the arrangement of Figure 1 is used to display a thin character, there may be cases where the primary colours are undesirably observable separately from one another at the ends of the character.

(III) Brightness

By way of example, consider the maximum brightness which is obtainable in displaying "white" where cathode ray tubes (CRTs) are employed as the light-emission elements. If in the arrangement of Figure 1 the total number of CRT elements is N, then the number of red, green and blue CRT elements is N/3. Therefore, utilizing the NTSC system, the brightness is:

$$Y_1 = (0.3I_R + 0.59I_G + 0.11I_B) \times N/3A$$

where A is the display area and $I_R$, $I_G$ and $I_B$ are the output luminous fluxes of the red, green and blue CRT elements, respectively. "White" can be displayed with $I_R = I_G = I_B$. Therefore, the maximum brightness of "white" is determined by whichever of the output luminous fluxes $I_R$, $I_G$ and $I_B$ has the lowest maximum: if this lowest maximum is represented by $\hat{I}$, then the realizable maximum brightness of "white" is $\hat{Y}_1 = N\hat{I}/3A$.

As will be described below, with presently available CRT technology the maximum output luminous flux $\hat{I}_G$ is the lowest of the three. Therefore, the maximum brightness of "white" in the arrangement of Figure 1 is $\hat{Y}_1 = N\hat{I}_G/3A$ with $\hat{I} = \hat{I}_G$. Accordingly, the maximum brightness of "white" in Figure 1 is limited by $\hat{I}_G$ so that, as a practical matter, a sufficiently high maximum brightness cannot be obtained.

Some of the above-described problems can be solved by using display apparatus as disclosed in U.S. Patent No. 3935590. In the embodiment shown in Figure 11 of this patent, the light-emission elements are arranged in a square lattice with two green light-emission elements being disposed respectively at one pair of diagonally opposite corners of each square and with red and blue light-emission elements being disposed respectively at the other pair of diagonally opposite corners of each said square.

The red and blue light-emission elements are disposed alternately throughout the display surface, and there are twice as many green light-emission elements as there are either red or blue light-emission elements. However, this construction still suffers from the following disadvantage regarding colour mixing.

As indicated previously, the colour mixing ability of the apparatus when used to display characters composed mainly of horizontal and vertical strokes, will depend on the separation between each green light-emission element and the nearest red or blue light-emission element in the horizontal and vertical directions, i.e. in directions parallel to the peripheral edges of the display surface. In the apparatus of U.S. Patent 3935590, the squares of the lattice are arranged with their sides disposed parallel to these peripheral edges. Suppose that $P_0$ is the actual minimum separation between adjacent ones of the light-emission elements (governed inter alia by the size of the elements themselves), then it can readily be appreciated that the aforesaid separation cannot be less than $P_0$. As will become apparent from the ensuing description, the present invention is able to achieve a corresponding separation which is rather less than this, so that much thinner strokes can be displayed in proportion to the size of the light-emission elements themselves.

According to the present invention, there is provided apparatus for displaying coloured images which is generally similar to that disclosed in U.S. Patent No. 3935590, but in which each light-emission element is formed by a cathode ray tube which emits only red, green or blue light, and in which the diagonals (rather than the sides) of the lattice squares are arranged parallel to the peripheral edges of the display surface, respectively. By using such a construction, the invention is able to achieve a separation of $P_0/\sqrt{2}$ between each green light-emission element and the nearest red or blue light-emission element in directions parallel to the said peripheral edges, where $P_0$ is the smallest actual separation between adjacent ones of the light-emission elements.

The invention will now be further described, by way of example only, with reference to the remaining figures of the accompanying drawings, in which:—

Figure 4 is a diagram showing the arrangement of light-emission elements in a colour display apparatus according to the present invention;

Figure 5 is a diagram showing an edge portion of an image as displayed by the apparatus of Figure 4; and

Figure 6 is a diagram showing a thin line as displayed by the apparatus of Figure 4.

In the apparatus shown in Figure 4, a plurality of light-emission elements 1R, 1G, 1B are arranged in a square lattice on a display surface 2, each of the elements being in the form of a cathode ray tube (CRT) which emits only red (R), green (G) or blue (B) light. The arrangement is such that two green CRT's are disposed respectively at one pair of diagonally opposite corners of each square, and a red and a blue CRT are disposed respectively at the other pair of diagonally opposite corners, the red and blue CRT's being disposed alternately throughout the display surface. It will thus be manifest that there are twice as many green CRT's as there are either red or blue CRT's.

The CRT's are arranged so that the above-mentioned diagonals are parallel to respective peripheral edges $2a$ and $2b$ of the display surface 2. The green CRT's have a pitch of $P_2$ in directions parallel to the peripheral edges $2a$, $2b$, and the smallest separation between adjacent CRT's (which is in the oblique direction) is $P_0$. Colour video signals are sampled and applied to the CRT's corresponding to their positions so that they emit light at a brightness corresponding to the signal amplitude, thereby displaying the desired image. However, it should be noted that control is so effected that the red and blue CRT's emit light at a brightness which is twice that used in the conventional arrangement shown in Figure 1.

The above-described arrangement of the CRT's provides the following advantageous practical effects, which will be explained particularly by comparison with the conventional apparatus shown in Figure 1.

(I) Resolution

As mentioned above, the resolution of the displayed image is determined mainly by the pitch of the green light-emission elements because the resolving power of the human eye is highest in resolution for wavelengths around that of green light. Because of the structural limitations of the display surface and the light-emission elements, the pitch of these elements has a lower limit. In the case where the CRT's are arranged with a pitch $P_0$ equal to this lower limit, with respect to the equivalent sampling pitch which determines the resolution of the displayed image, the horizontal and vertical pitch of the green CRT's is given by $P_2 = \sqrt{2}$ Po. This is to be compared with the conventional arrangement shown in Figure 1 where the equivalent pitch $P_2$ is equal to 1.5 $P_0$. In addition, the pitch in the oblique direction of the display surface is $1.5 \times \sqrt{2}\, P_0$ in Figure 1 and $P_0$ in Figure 4. Accordingly, the arrangement of Figure 4 produces a significantly improved image having higher resolution than that of Figure 1.

(II) Colour mixing

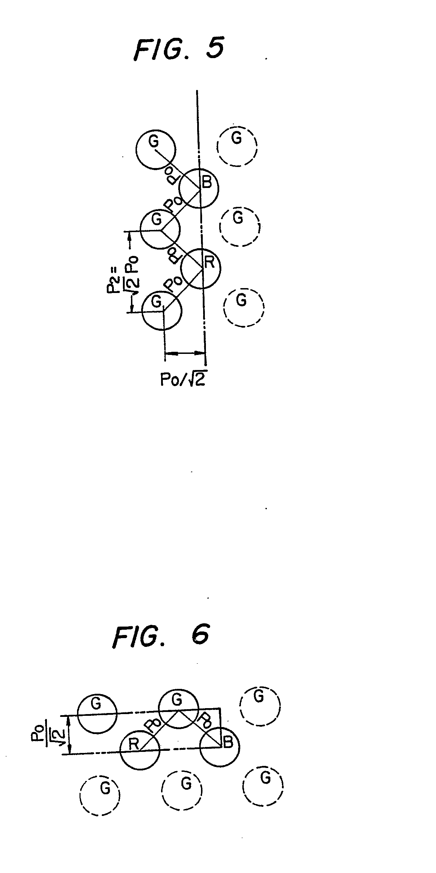

Figure 5 illustrates a display in an edge portion of an image produced by the apparatus of Figure 4. As in Figure 2, it is assumed that the edge of a white figure such as a character is positioned as indicated by the double chain-dotted line, the area to the left of the line being white while the area to the right thereof is black.

In the case of Figure 1, the red light-emission element at the end of the figure is spaced by about $1.5P_0$ from the green light-emission element with which its light is to be mixed, while it is spaced by $P_0$ in the case of Figure 5. The same applies for the blue and green light-emission elements. Thus, colour mixing occurs more readily in the arrangement of Figure 4 than with the arrangement of Figure 1, thus improving the quality of the displayed image even at the edge portions thereof.

As mentioned previously, in the case where a thin white line is to be displayed (either horizontally or vertically) it is necessary to eliminate the possibility of only red or blue elements emitting light at the end of the line. In order to meet this requirement, the line should be sufficiently wide that it covers at least two rows of light-emission elements. From this, it will be apparent that the minimum width of the line will be governed by the separation between each green CRT and the nearest red or blue CRT in a direction parallel to one or the other of the peripheral edges $2a$, $2b$ of the display surface 2 (i.e. vertically or horizontally). In the arrangement shown in Figure 4, this separation is equal to $P_0/\sqrt{2}$, which is to be compared with the construction illustrated in Figure 1 where the equivalent separation in a vertical direction is $1.5P_0$ and in a horizontal direction is $P_0$.

In the construction shown in Figure 11 of the above-mentioned U.S. Patent No. 2925590, the equivalent separation is $P_0$ in both horizontal and vertical directions.

As indicated previously, most characters to be displayed are constituted by vertical and horizontal strokes. Therefore, it will be appreciated that the arrangement shown in Figure 4 is advantageous in that it can display thinner characters with minimum separation of the primary colours at the edges.

(III) Brightness

By way of example, consider the maximum brightness which can be obtained in displaying "white". If the total number of CRT's is represented by N, then the numbers of red, green and blue CRT elements are N/4, N/2 and N/4, respectively. Therefore, the brightness of the display is given by:

$$Y_2 = (0.3 I_R/4 + 0.59 I_G/2 + 0.11 I_B/4) \times N/A$$

where A is the area of the display. "White" can be displayed with $I_R = 2I_G = I_B$.

Whichever of the outputs $I_R$ and $I_B$ has the lower maximum, if this maximum output is represented by $\hat{I}$, then when $\hat{I} < 2\hat{I}_G$ the maximum brightness of "white" is determined by $\hat{I}$ such that: $\hat{Y}_2 = N\,\hat{I}/4A$. When $\hat{I} \geqslant 2\hat{I}_G$, $\hat{Y}'2 = N\,\hat{I}_G/2A$.

As mentioned above, the maximum brightness of "white" which can be obtained using the arrangement of Figure 1 is $\hat{Y}_1 = N\hat{I}_G/3A$ with $\hat{I} = \hat{I}_G$. Thus, by comparing the maximum bright-

ness of "white" $\hat{Y}_1$ which can be obtained in the apparatus of Figure 1 with the maximum brightness $\hat{Y}_2$ or $\hat{Y}'_2$ obtainable with the arrangement of Figure 4, it will be appreciated that the latter arrangement produces the greater brightness with $\hat{i}/\hat{i}_G > 4/3$.

At present, because of the available efficiencies and service lives of the red, green and blue fluorescent materials of CRT's, the green flourescent material provides the lowest maximum output while the red and blue fluorescent materials can produce a much greater maximum output. If a control system is employed in which the brightness control for displaying an image including half-tones is carried out using time width control, the linearity of light emission output with beam current may be disregarded. Therefore, the maximum outputs of the CRT's are determined primarily from service life factors. Thus, presently available CRT's can be operated with $K \simeq 2$. Accordingly, a maximum brightness of "white" $\hat{Y}_2 \simeq N \; I_G/2A$ can be produced. That is, the maximum brightness which can be obtained with the arrangement of Figure 4 is about 1.5 times that obtainable with the arrangement of Figure 1.

In the case where the total number of CRT's is limited by their pitch due to structural considerations, the total number of CRT's is $N_1 = A/1.5P_0^2$ in the case of Figure 1 and $N_2 = A/P_0^2$ in the case of Figure 4. Therefore, the maximum brightness which can be produced using the arrangement of Figure 4 is $(1.5)^2 = 2.25$ times that of the arrangement of Figure 1.

## Claim

Apparatus for displaying coloured images, comprising a display surface (2) composed of a plurality of red, green and blue light-emission elements (1R, 1G, 1B) arranged in a square lattice so that two green light-emission elements (1G) are disposed respectively at one pair of diagonally opposite corners of each square and red and blue light-emission elements (1R, 1B) are disposed respectively at the other pair of diagonally opposite corners of said square, the red and blue light-emission elements (1R, 1B) being disposed alternately throughout the display surface, whereby there are twice as many green light-emission elements (1G) as there are either red or blue light emission elements (1R, 1B), characterized in that each light-emission element (1R, 1G, 1B) is formed by a respective cathode ray tube which emits only red, green or blue light, and the diagonals of each said square are arranged parallel to respective peripheral edges (2a, 2b) of the display surface (2), whereby the separation between each green light-emission element (1G) and the nearest red or blue light-emission element (1R, 1B) in directions parallel to said peripheral edges (2a, 2b) of the display surface is reduced to $Po/\sqrt{2}$, where Po is the smallest actual separation between adjacent ones of the light-emission elements (1R, 1G, 1B).

## Patentanspruch

Vorrichtung zur Anzeige von farbigen Bildern mit einer Anzeigeoberfläche (2), die aus einer Vielzahl von roten, grünen und blauen Lichtemissionselementen (1R, 1G, 1B) besteht, die in einem Rechteckgitter angeordnet sind, so daß zwei grüne Lichtemissionselemente (1G) jeweils in einem Paar von diagonal gegenüberliegenden Ecken jedes Rechteckes vorgesehen sind und so daß rote und blaue Lichtemissionselemente (1R, 1B) jeweils im anderen Paar von diagonal gegenüberliegenden Ecken dieses Rechtekkes vorgesehen sind, wobei die roten und blauen Lichtemissionselemente (1G, 1B) abwechselnd auf der Anzeigefläche vorgesehen sind, und wobei es zweimal so viele grüne Lichtemissionselemente (1G) gibt, wie entweder rote oder blaue Lichtemissionselemente (1G, 1B) vorhanden sind, dadurch gekennzeichnet, daß jedes Lichtemissionselement (1R, 1G, 1B) durch eine entsprechende Kathodenstrahlröhre gebildet ist, die nur rotes, grünes oder blaues Licht aussendet und daß die Diagonalen jedes Rechteckes parallel zu den entsprechenden peripheren Kanten (2a, 2b) der Anzeigeoberfläche (2) angeordnet sind, wobei die Teilung oder Staffelung zwischen jedem grünen Lichtemissionselement (1G) und dem nächsten roten oder blauen Lichtemissionselement (1R, 1B) in Richtungen parallel zu den peripheren Kanten (2a, 2b) der Anzeigeoberfläche auf $PO/\sqrt{2}$ verringert ist, wobei PO die kleinste tatsächliche Teilung oder Staffelung zwischen benachbarten Lichtemissionselementen (1R, 1G, 1B) ist.

## Revendication

Appareil pour afficher des images en couleur, comprenant une surface d'affichage (2) composée d'une pluralité d'éléments photo-émetteurs rouges, verts et bleus (1R, 1V, 1B) disposés selon un réseau carré, de façon à ce que deux éléments photo-émetteurs verts (1V) soient respectivement disposés aux deux coins diagonalement opposés de chaque carré et que les éléments photo-émetteurs rouges et bleus (1R, 1B) soient respectivement disposés aux deux autres coins diagonalement opposés dudit carré, les éléments photo-émetteurs rouges et bleus (1R, 1B) étant disposés alternativement sur toute la surface d'affichage, de sorte que l'on trouve deux fois plus d'éléments photo-émetteurs verts (1V) que d'éléments photo-émetteurs rouges ou bleus (1R, 1B), caractérisé en ce que chaque élément photo-émetteur (1R, 1V, 1B) est constitué par un tube à rayons cathodiques respectif qui n'émet que de la lumière rouge, verte ou bleue, et en ce que les diagonales de chacun desdits carrés sont agencés parallèlement aux bords périphériques respectifs (2a, 2b) de la surface d'affichage (2), la séparation entre chaque élément photo-émetteur vert (1V) et l'élément photo-émetteur rouge ou bleu le plus proche (1R, 1B) dans des directions parallèles auxdits bords périphériques (2a, 2b) de la surface d'affichage étant réduite à $P_0/\sqrt{2}$, où $P_0$ est la séparation effective la plus petite entre les éléments photo-émetteurs adjacents (1R, 1V, 1B).

# FIG. 1 PRIOR ART

# FIG. 2

## FIG. 3

## FIG. 4

# FIG. 5

$$P_2 = \sqrt{2}\,P_0$$

$$P_0/\sqrt{2}$$

# FIG. 6

$$\frac{P_0}{\sqrt{2}}$$